# EUROPEAN PATENT SPECIFICATION

(11) **EP 3 799 969 B1**
(45) Date of publication and mention of the grant of the patent: **13.05.2026**
(21) Application number: 20197915.0
(22) Date of filing: 23.09.2020
(51) Int. Cl.: B08B 9/08, B08B 9/093, B65D 88/60, E03F 7/10, B60P 3/22, B60P 3/24

(54) **ZERO ENTRY SEDIMENT REMOVAL FROM STORAGE TANKS**
NULL-EINTRAG-SEDIMENTENTFERNUNG AUS LAGERTANKS
ÉLIMINATION DE SÉDIMENTS À ENTRÉE ZÉRO DANS DES RÉSERVOIRS DE STOCKAGE

(30) Priority: 23.09.2019 GB 201913700
(43) Date of publication of application: 07.04.2021
(73) Proprietor: Re-Gen Robotics Limited, Newry Down BT35 6JQ (GB)
(72) Inventor: DOHERTY, Joseph, Newry, Down BT35 6JQ (GB); DOHERTY, Aidan, Newry, Down BT35 6JQ (GB); DUFFY, Fintan, Newry, BT35 6JQ (GB); DOHERTY, Colin, Newry, Down BT35 6JQ (GB)
(74) Representative: Murgitroyd & Company

(56) References cited:
- WO-A1-2017/103815
- FR-A1- 2 789 059
- GB-A- 2 565 953
- RU-C1- 2 616 051
- US-A- 4 721 431
- US-A1- 2008 040 945
- US-A1- 2009 145 853
- REX MEDIA: "RE-GEN ROBOTICS", 14 June 2019 (2019-06-14), XP055887764, Retrieved from the Internet <URL:https://vimeo.com/342377672/6635b2c787> [retrieved on 20190624]
- ST- CLEANING GMBH: "ATEX Zone 0 Robot Animation 3D ST Cleaning GmbH", 27 November 2017 (2017-11-27), XP055891418, Retrieved from the Internet <URL:https://www.youtube.com/watch?v=dhCQRvdZdHs>

## Description

### Background of the Invention

This invention relates to apparatus and method for the removal of sediment from tanks used for storing hazardous chemicals, typically in large distribution centres. More particularly, the invention relates to removal of sediment via a remotely controlled robotic cleaner. The robotic cleaner is operated by an operator situated in a sealed controlled environment inside an associated control cabin.

In the petroleum refining, petrochemical and chemical industries large storage tanks are commonly used. Such tanks are often surrounded by a bund wall. Various processes result in the creation of waste materials, both solid and liquid, alongside the desired products. These waste materials accumulate over time in the bottom of the storage tank and become more concentrated as the level of material stored in the tank decreases.

The accumulation of such waste materials can pose a danger to the quality of the materials being stored, or to processes that these chemicals are destined for, by their accidental inclusion in any such deliveries that are dispatched from the storage tank.

Current systems of cleaning involve the deployment of personnel into the tank in suitable personal protective equipment with appropriate tools to remove the waste materials and sediment. This process generally uses some form of high-pressure water treatment and a vacuum system to remove the materials to an appropriate storage vessel where they are held until they can be correctly treated, recycled and/or disposed of.

The inclusion of human persons inside of the tank leads to an extremely dangerous situation with workers being exposed to dangerous chemicals and working in a confined, potentially explosive environment. It is an object of the present invention to remove such dangerous exposure to workers, by providing a mobile unit capable of performing all the relevant tasks required to facilitate the removal of all waste materials in a safe manner without the operator entering the tank. The operator is situated in a control cabin which can provide a sealed controlled environment, to remove the exposure of the operator to the hazardous zone inside the storage tank or surrounding it.

GB2565953A provides a mobile oilfield tool service centre which includes an intermodal container such as an ISO container compliant with a global containerized intermodal freight transport system. Oilfield tool service components are housed within the intermodal container for subjecting an oilfield tool to at least one process that repairs or rehabilitates the oilfield tool.

US2009/145853 shows a unit containing a control centre providing some enhanced safety features, for example, a static discharge reel, first aid kit or fire extinguishers.

The following document shows some aspects of a mobile tank cleaning apparatus for the removal of sediment from tanks used for storing hazardous chemicals: video from Rex Media: "RE-GEN ROBOTICS", 14 June 2019, Internet URL https://vimeo.com/342377672/6635b2c787,

The document St- Cleaning GmbH: "ATEX Zone 0 Robot Animation 3D ST Cleaning GmbH", dated 27 November 2017, internet URL: https://www.voutube.com/watch?v=dhCQRvdZdHs discloses another mobile tank cleaning apparatus from less hazardous tanks.

### Summary of the Invention

The invention is directed to a mobile tank-cleaning apparatus for sediment removal from a hazardous-storage tank as described in appended claim 1

The invention is also directed to a method of sediment removal from a hazardous-storage tank comprising the steps described in appended claim 14.

The invention aims to overcome the problem of sediment removal from hazardous storage tanks whilst exposing human persons to hazardous operating conditions either inside or nearby the storage tank, particularly but not exclusively oil or gas of chemical storage tanks, including those designated as 'Zone 0' storage tanks, and optionally a bunded hazardous-storage tank.

### Brief Description of the Drawings

Embodiments of the present invention will now be described by way of example and with reference to the accompanying drawings in which:
Fig. 1 is a representative view of an arrival on site and next to a storage tank of a mobile tank cleaning apparatus according to one embodiment of the present invention;
Fig. 2 is a representative view of a container being deployed from a road vehicle of the apparatus shown in Figure 1 via the integrated lifting means;
Fig. 3 is a representative view of the Hazardous Area Zones and the areas of operation for the apparatus shown in Figure 1;
Fig. 4 is a sectional view of the container of Figures 1-3;
Fig. 5 is a sectional view of the storage tank and robotic cleaner of Figures 1-3; and
Fig 6. is a diagrammatic view of the robotic cleaner of Figure 5 in operation inside the storage tank.
Fig. 7 is a sectional view of the container in its deployed state within a Zone 1 Hazardous Area;
Fig. 8 is an isometric view of the container in its deployed state within a Zone 1 Hazardous Area;
Fig. 9 is a representative view of the saddle bag tanks present on the exterior of the vacuum tanker;
Fig.s 10a-c are three cross-sectional views of the vacuum tanker, showing the moveable piston at three different positions within the vacuum tanker;
Fig. 11 is a sectional view of the vacuum tanker showing a moveable piston and its locking mechanism.

### Detailed Description of the Invention

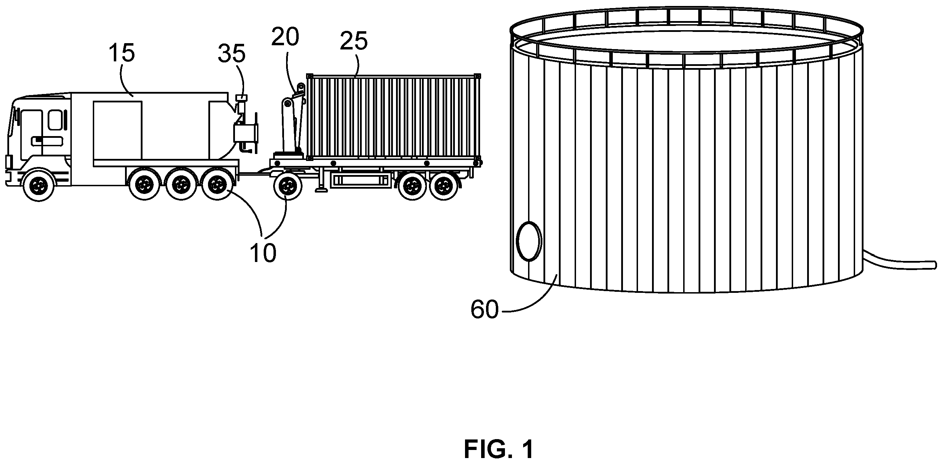

Referring initially to Fig. 1, a representative view is provided of a mobile tank cleaning apparatus (10) according to one embodiment of the present invention.

Optionally, the tank cleaning apparatus comprises a road vehicle (15) having an integrated lifting means (20) and a unit (25), the unit (25) forming a housing or comprising a controlled environment operator workstation (40), and housing a robotic cleaner (30). The apparatus further comprises a multiple-section vacuum tanker (35) for both providing cleaning fluid, and for temporary storage of the sediment removed. This may be a vacuum tanker, either being part of the road vehicle (15) or mobile because of the road vehicle (15).

The apparatus is mobile by means of being based on a road vehicle (15). The road vehicle (15) may be a tractor-trailer unit as shown, or provided by other means or arrangements on site. Optionally, the tractor carries the vacuum tanker (35), and the trailer carries the unit (25) and the integrated lifting means (20).

In one embodiment, the mobile tank cleaning apparatus (10) arrives on-site as a single assembly before deployment takes place.

In one embodiment, the lifting means (20) is a crane. Optionally, the lifting means (20) may be or may include a derrick, hoist, winch and the like, able to deploy the unit (25) on and off the road vehicle (15) as required. The lifting means may be Zone 1 compliant.

The unit (25) may have any suitable size, shape or design, optionally being wholly or substantially cuboid.

In one embodiment, the unit (25) is an adapted ISO 20' shipping container.

In another embodiment, the unit (25) is an adapted ISO 40' shipping container.

In another embodiment, the unit (25) is custom-made or made to order or designed to suit a particular road vehicle or vehicle carrier such as a trailer, or a particular storage tank requirement.

The unit (25) may comprise at least two sections or portions. At least one portion, optionally in two or more parts, of the unit could house the robotic cleaner (30) and any other devices or equipment required, including but not limited to one or more of the group comprising umbilicals, according to the invention, hoses, generators, fuel tanks, ramps, pumps, valves, connectors and ports. At least one other portion can house a control centre. Optionally, the unit has three portions.

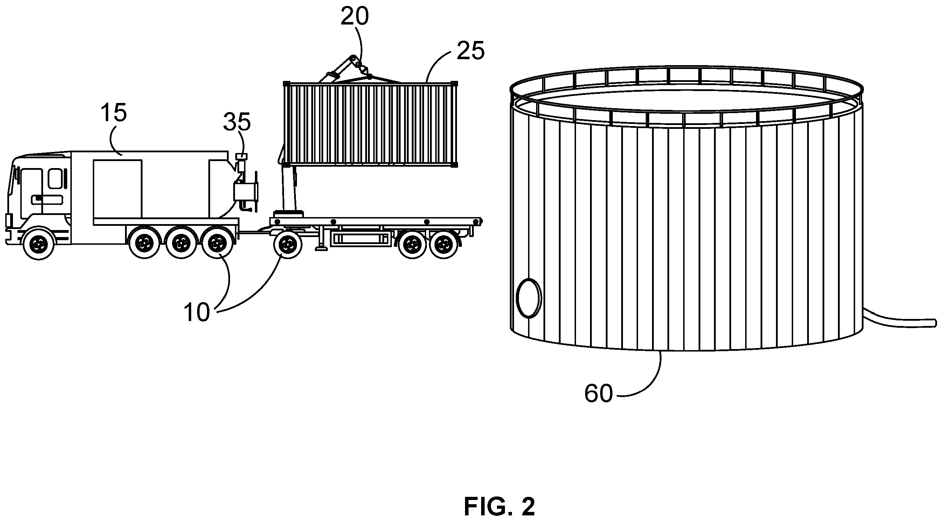

Fig. 2 shows the unit (25) being deployed from the road vehicle (15) via the integrated lifting means (20). The unit (25) is moveable on and off the road vehicle (15) via the integrated lifting means (20). The unit may be deployed within a Zone 1 Hazardous Area.

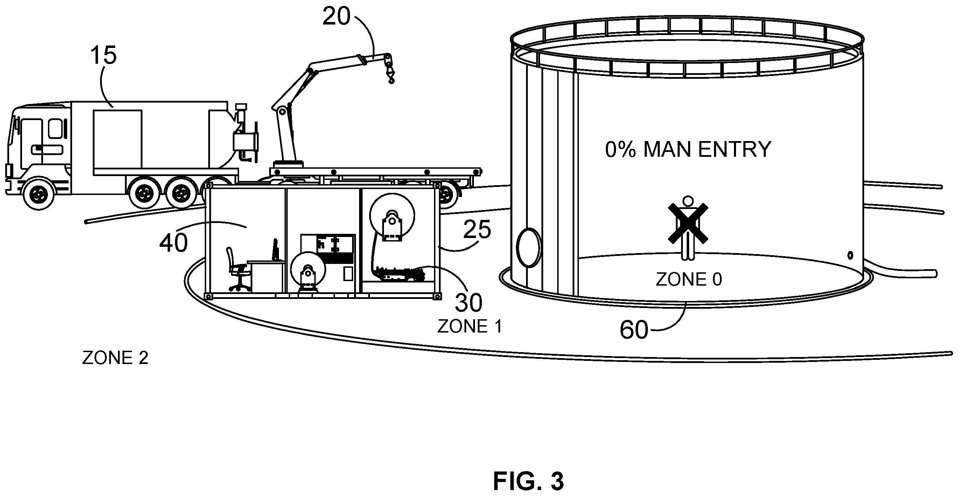

Fig. 3 outlines an example of three hazardous zones that are typical around a chemical storage tank. These are shown Hazardous Area Zones 0, 1 and 2. The Different Zones of Hazardous Areas as defined by international standards, these being:
Zone 0 Hazardous Area: defined as a place in which an explosive atmosphere consisting of a mixture with air of flammable substances in the form of gas, vapour or mist is present continuously or for long periods of time.

Zone 1 Hazardous Area: defined as a place in which an explosive atmosphere consisting of a mixture with air of flammable substances in the form of gas, vapour or mist is likely to occur in normal operation occasionally.

Zone 2 Hazardous Area: defined as a place in which an explosive atmosphere consisting of a mixture with air of flammable substances in the form of gas, vapour or mist is not likely to occur in normal operation but, if it does occur, persists for a short period only.

Similar standards apply to oil and gas storage tanks.

The storage tank is shown in Figure 3 as being a Zone 0 environment, due to the presence of explosive gases. A bund wall (not shown) may be present around the storage tank in a manner and position known in the art, and not further described herein.

The integrative lifting means (20) is Zone 1 compliant to allow it to be used in different areas up to and including Zone 1 restricted areas.

The unit is locatable and operable in Zone 1 conditions. The unit provides a sealed controlled environment for a user or operator of the invention in particular during the cleaning and sediment removal stages. The operator workstation is able to be housed within the unit. In this way, the operator is protected from both Zone 0 and Zone 1 conditions whilst working in the unit. This removes the risk associated with human persons being exposed to hazardous conditions, such as during traditional tank cleaning.

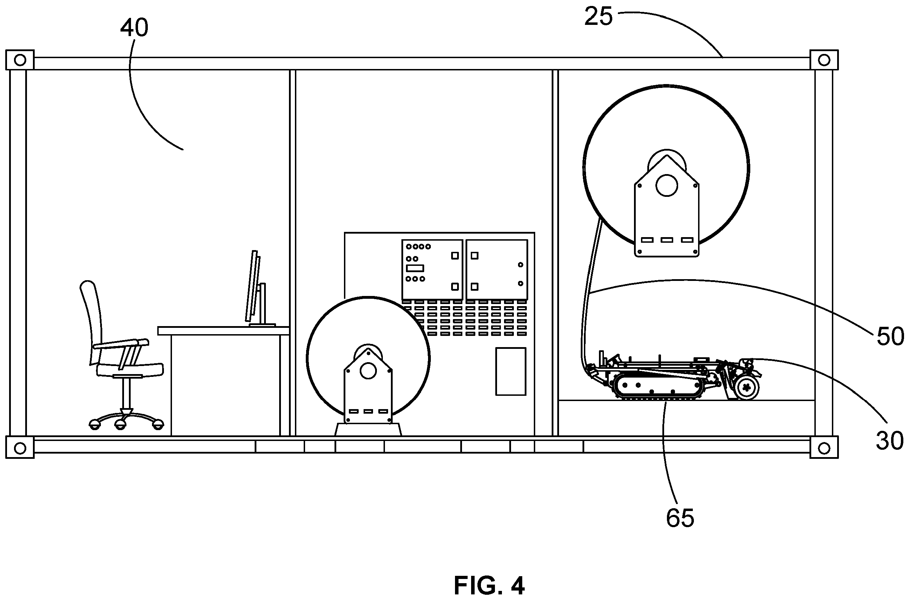

Fig. 4 shows a schematic cross-sectional view of the unit (25) as a container. The container houses an operator work station (40), a robotic cleaner (30) in a robotic cleaner housing, and an umbilical hose (50) in an umbilical hose housing. The operator workstation (40) is a controlled environment in which a human person can reside and operate the robotic cleaner (30) remotely. The operator workstation (40) comprises controls and monitors for signals to be sent to and from the robotic cleaner (30) via the umbilical hose (50), typically via one or more suitable control and/or signal lines.

The container may also provide the required storage space for one or more hoses or lines for the supply of cleaning fluid and/or water and/or chemicals to the robotic cleaner for use in cleaning the storage tank and sediment removal, and/or one or more hoses or lines for the transfer of sediment being removed, and any associated cleaning fluid or water, to a suitable waste storage vessel, container or tanker, described hereinafter.

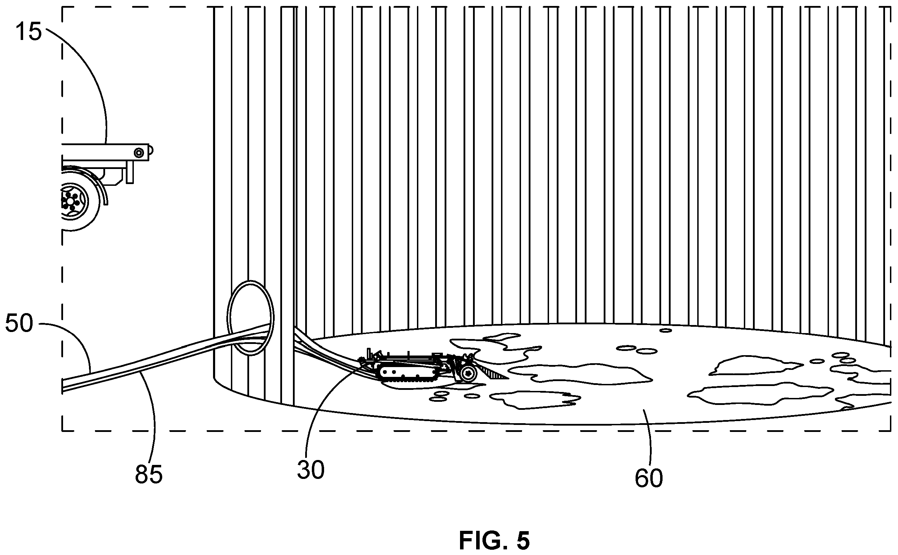

Fig. 5 shows deployment of the robotic cleaner (30) into the storage tank (60) through a lower level access point. Where entry is above ground level, the robotic cleaner (30) may enter the tank via a ramp system (55). The ramp system (55) may be existing, or be provided as part of the apparatus of the present invention. Optionally, the lifting means (20) of the present invention can position a suitable ramp system (55) in or over or around a suitable tank access point. The ramp system (55) may comprise an external ramp and/or an internal ramp as required.

Optionally, the robotic cleaner (30) is a tracked vehicle. Further optionally, the robotic vehicle (30) has a set of rubber tracks (65) comprising integrated magnets. The magnets provide additional traction to the robotic cleaner (30) within a storage tank (60).

In use, the robotic cleaner (30) is attached to the umbilical hose (50) extending back into the container (25) and connected to the operator workstation (40). The robotic cleaner (30) can then be operated remotely. The robotic cleaner (30) can be deployed from its housing in the container (25) and manoeuvred to the outside of the tank (60), optionally in a contracted configuration so as to fit through the lower level access point. The robotic cleaner may enter the storage tank (60) via a series of adjustable ramps (55) outside and inside the tank (60) at the lower level access point. Alternatively, in situations where there are spill containment or bund walls surrounding the tanks (60), the integrative lifting means (20) may deploy the robotic cleaner (30) and ramps (55) over the wall.

In one embodiment, the robotic cleaner (30) enters the tank (60) via a custom-designed ramp system (55). The ramps may be stored in a portion of the container (25) which houses the robotic cleaner (30) and any other equipment. The ramps may be deployed by the integrated lifting means (20). The ramps (55) may be placed in a position at the entrance to the tank (60). The ramp can have a width greater than the tank entrance, such that the ramp will straddle the tank entrance.

In another embodiment, the ramps may be articulated vertically at both ends. This may be facilitated by manual hydraulic pumps and hydraulic cylinders, or any other suitable means, such that the ramps are moveable up and down. This enables the robotic cleaner to enter and exit the tank easily.

The robotic cleaner (30) may be controlled via a series of hoses within the general umbilical hose (50), that operates hydraulic functions on the robotic cleaner. Hydraulic lines allow for safe operation of the robotic cleaner within the storage tank, which is a Zone 0 Hazardous Area, as they prevent creation of a spark. Other lines within the same umbilical hose may provide high pressure water to the robotic cleaner, such as suitable jet washer heads (75) thereon. Optionally, another line within the umbilical hose provides a vacuum or negative pressure to a sediment removal head, and one or more other lines carry the signals from the cameras on the robotic cleaner back to suitable workstation monitors. Optionally, the vacuum umbilical for sediment removal may be provided as a separate umbilical.

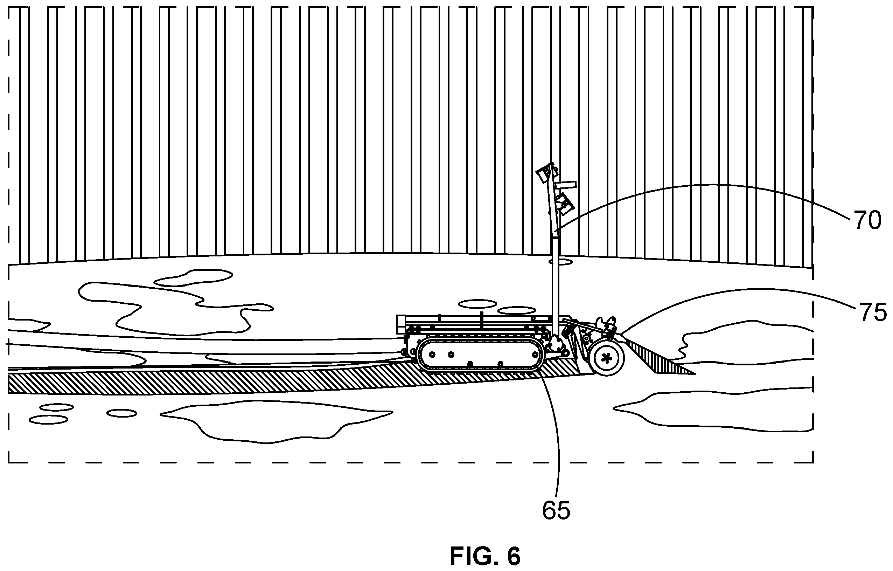

Fig. 6 shows the robotic cleaner (30) inside the tank (60) in an expanded position, wherein an arm (70) is raised to position one or more cameras at the end of the arm (70) into an overhead or 'bird's eye' view relative to the front of the robotic cleaner (30).

The robotic cleaner (30) may have one or more jet washer heads (75) to provide water for cleaning the storage tank (60), and a sediment removal head. The sediment removal head may use a negative or vacuum pressure arrangement, optionally provided by a connection to a vacuum-based tanker (35) on the tractor part of the road vehicle, as shown in Figures 1 and 2.

Once the robotic cleaner (30) is inside the storage tank (60) and the camera arm (70) extended, the operator remotely manoeuvres the robotic cleaner (30) around the bottom of the tank (60) whilst activating high pressure water jets (75) that are fed through the umbilical hoses (50). The robotic cleaner embodiment shown uses a vacuum head with integral auger head to move and break up solid material. The vacuum provided from the vacuum waste tanker serves to remove the mixture of water and sediment via another of the umbilical lines simultaneously. This mixture is then held in the waste tank until the process is complete, at which point the road vehicle can transfer the mixture into another suitable tanker vehicle which will transport the mixture to a licenced recycling or disposal facility.

Upon completion of the sediment removal process, the deployment steps are carried out in reverse order until all components are in their allocated storage positions and the tank cleaning apparatus is recombined into the single mobile assembly ready for transport to another site to repeat the process.

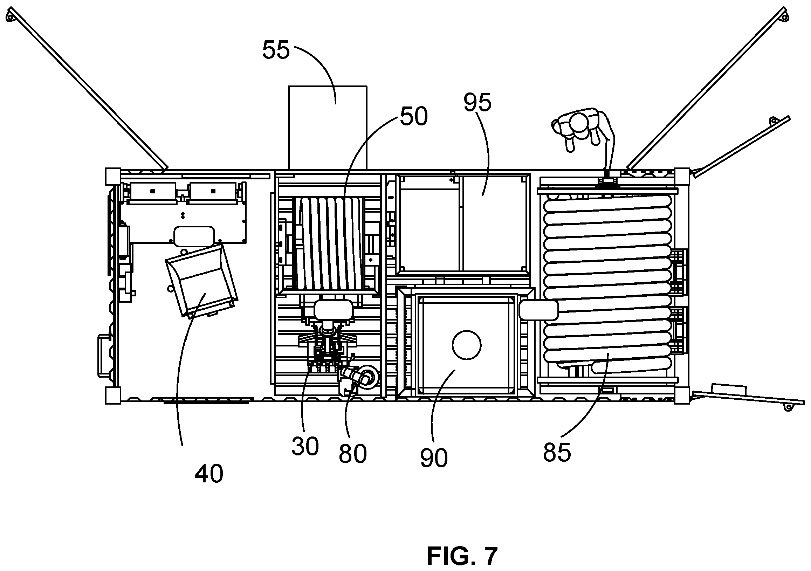

Fig. 7 provides a sectional view of the container in its deployed state within a Zone 1 Hazardous Area.

The unit container has three sections including an operator workstation (40), a section for housing the robotic cleaner (30), and a section for housing equipment.

Optionally, the operator workstation area may house furniture or office equipment.

The section for housing the robotic cleaner may further comprise a high pressure connection. Part of the umbilical (50) which connects to the high pressure water jets on the robotic cleaner (30), carries high pressure water or cleaning fluid to the robotic cleaner during operation, which can be expelled to loosen the sediment present at the bottom of the storage tank. An integral high-pressure pump on the road vehicle may be used to pump cleaning fluid from the vacuum tanker to the robotic cleaner as discussed in more detail hereinafter. In one embodiment, the cleaning fluid may be pumped via a valve (80) present in the unit container.

Pumps located on the mobile apparatus can be powered by the engine and power train of the road vehicle.

The umbilical (50) further comprises hydraulic lines for controlling the robotic cleaner, which are operable by the operator via a control centre. The hydraulic lines may be used to control movement of the robotic cleaner, as well as further functions such as cameras, lights, jet heads and vacuum heads.

The unit container houses a control centre (40). The control centre may have a control interface. The control centre provides a sealed and controlled environment for the remote operator during the cleaning and sediment-removal stages of the present invention.

The vacuum umbilical used for sediment removal from the storage tank (60) may be stored in the container as a separate umbilical (85). This umbilical is connectable to the robotic cleaner and the vacuum tanker during use to provide the removal of sediment from the storage tank into the vacuum tanker.

The unit container may further comprise a diesel tank (90), which serves as a fuel supply for an on-board power pack (95) such as a diesel generator for the control centre.

A ramp (55) may be connected to the unit container to assist with deployment of the robotic cleaner.

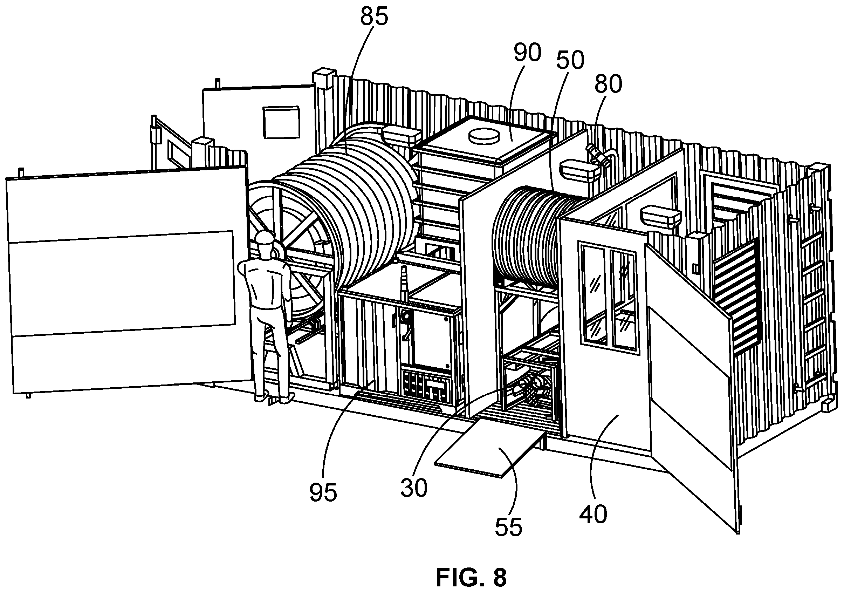

Fig. 8 provides an isometric view of the container of Fig. 7 in its deployed state within a Zone 1 Hazardous Area.

The section of the unit container for housing the robotic cleaner (30) also houses a high pressure umbilical hose (50).The robotic cleaner is connected to one or more umbilicals during use, such as umbilical (50) and/or the umbilical for sediment removal (85).

The multi-section vacuum tanker (35) may have any suitable shape, size or design. In one embodiment, the vacuum tanker is a custom-designed tanker. The vacuum tanker can also comprise one or more vacuum pumps, typically being integral with a port or line external to the tanker. Optionally, the tanker comprises larger vacuum pumps than those standard in the art.

Additionally or alternatively, the tanker (35) comprises one or more high pressure water pumps to provide water to the jet washer heads (75) at higher pressure.

The mobile tank-cleaning apparatus may include one or more cleaning fluid reservoirs or tanks in addition to the section of the multiple-section vacuum tanker being the volume-variable cleaning fluid reservoir section, optionally as integral reservoirs or tanks. In this way, separate supply or delivery of cleaning fluid is not required.

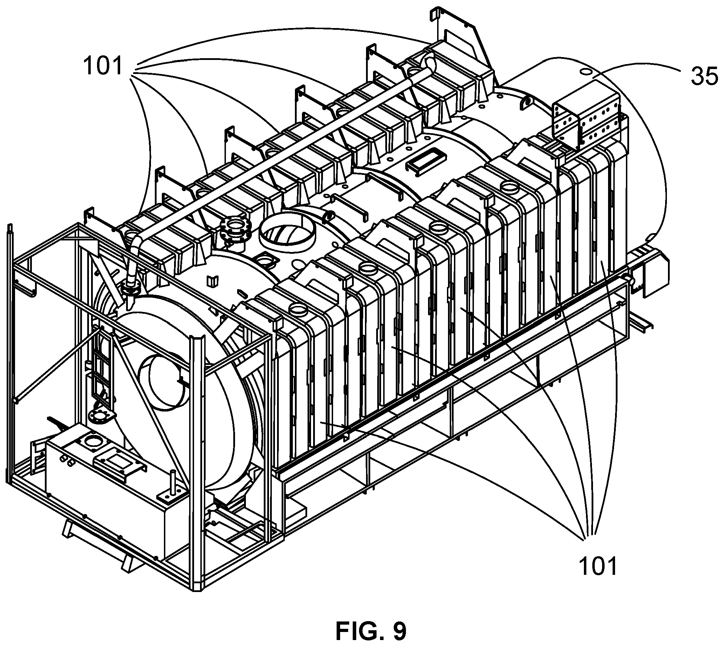

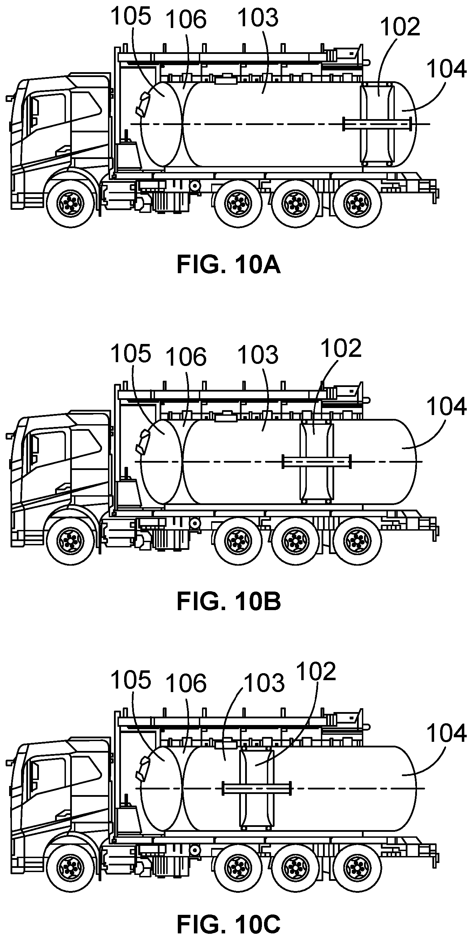

Optionally, the tanker (35) may also comprise one or more containers such as integrated saddle bag tanks (101). Fig. 9 provides a representative view of saddle bag tanks (101) present on the exterior of the vacuum tanker. Figures 10a-c show the vacuum tanker having an additional water storage tank (105). Optionally, the water from this tank can be used in a vacuum pump located on the lower chassis of the road vehicle.

The cleaning fluid reservoir section of the vacuum tanker and any further cleaning fluid tanks house the cleaning fluid that will be used for high pressure washing. The cleaning fluid may be any suitable substance or combination, typically designed to match the type of sediment and/or storage tank being cleaned. In one embodiment, the cleaning fluid is water. In another embodiment, the cleaning fluid is kerosene.

A cleaning fluid reservoir section of the vacuum tanker (35) and the additional saddle bag tanks (101), as depicted in Fig. 10, may hold approximately 11 tonnes of water. The majority of the water is held by the tanker. In one embodiment, the tanker holds up to 7 or 8 tonnes of the cleaning fluid, and an additional 3 or 4 tonnes are stored in the saddle bag tanks.

In one embodiment of the present invention, the vacuum tanker is connected to the robotic cleaner via a first umbilical to provide the cleaning fluid to the robotic cleaner, typically via the container, and by a second umbilical for sediment removal. The cleaning fluid is pumped from the vacuum tanker to the robotic cleaner via a high pressure pump. In one embodiment, the cleaning fluid is pumped to the robotic cleaner from the vacuum cleaner in the first instance, and the cleaning fluid is only pumped from the saddle bag tanks to the robotic cleaner once all of the cleaning fluid held by the vacuum tanker has been used.

Fig.s 10a-c are sectional views of the vacuum tanker, showing the moveable piston at various positions within the vacuum tanker.

The vacuum tanker (35) is a multiple section vacuum tanker. The tanker comprises at least two distinct portions. The largest portion of the vacuum tanker can be divided into two sections by a moveable piston (102). The first section is a volume-variable cleaning fluid reservoir section (103). The second section is a volume-variable sediment-storage section (104). The volume of each section can be changed and optionally maximised by moving the piston (102) present inside the vacuum tanker.

The piston (102) can be moved from a first position shown in Figure 10a at or towards the rear of the vacuum tanker, wherein the volume of the cleaning fluid reservoir section is maximised, and the volume of the sediment-storage section is minimised, to an intermediate position shown in Figure 10b, and then to a final second position shown in Figure 10c wherein the piston has moved to a position at or towards the front of the vacuum tanker (the end closest to the tractor) wherein the volume of the sediment-storage section is maximised ready for acceptance of the sediment being removed from the storage tank, and the volume of the cleaning fluid reservoir is minimised. Optionally, the piston may be moved to any number of positions in between the first and second positions to allow a user to vary the relative volumes of the section should this be suitable for the operation of the invention.

The piston (102) can be moved via one or more integral compressed air pumps. Pressure may be applied to the necessary section of the vacuum tanker to cause the piston to move. The piston is only moveable when it is not locked in position by a locking mechanism. One embodiment of a locking mechanism is discussed hereinafter.

The position of the piston may be controlled by the operator, by applying pressure to move the piston as required. Optionally, the piston can be configured such that can be moved automatically based on certain operating parameters.

Optionally, sensors may be present along the top of the vacuum tanker to indicate the position of the piston during use. The remote operator can determine piston position via an integrated digital display system on the tanker control panel, optionally located at the rear. The control panel can be utilised to control all tanker operations when the tanker is parked on-site. The control panel can be used to control cleaning fluid output from and sediment intake to the vacuum tanker.

During cleaning of the storage tank, cleaning fluid is pumped under high pressure from the vacuum tanker (35) to the robotic cleaner (30) as discussed above. Sediment is removed from the storage tank by the robotic cleaner via a vacuum umbilical, and stored in the vacuum tanker. In one embodiment, sediment removal takes place after ejection of the cleaning fluid into the storage tank. In another embodiment, tank cleaning and sediment removal overlap and/or take place simultaneously.

In one embodiment of the present invention, the process comprises the specific steps of:
providing all required cleaning fluid into the storage tank;
moving the piston from its first position to a second position, maximising the volume of the sediment-storage section;
and filling the sediment-storage section.

Optionally, the cleaning fluid is removed with the sediment. Optionally, removal of the sediment and any cleaning fluid is carried out in one or more operations depending upon the relative volumes of the sediment-storage section of the vacuum tanker and the material to be removed from the hazardous-storage tank.

After the tank cleaning and sediment removal steps are complete, the vacuum tanker may then be driven off-site to dispose of the sediment at an appropriate treatment facility, or for storage off-site. Optionally, the vacuum tanker may be connected to an on-site pipe network to facilitate disposal of the sediment from the vacuum tanker.

Optionally, the vacuum tanker may comprise an one or more additional portions or tanks for additional purposes. This could include an over-spill tank, such as an hour-glass-shaped overspill tank (106) shown in Figures 10a-c. This tank may be used for the settling of aerated liquid or foam prior to transfer to the sediment-storage section (104) of the vacuum tanker.

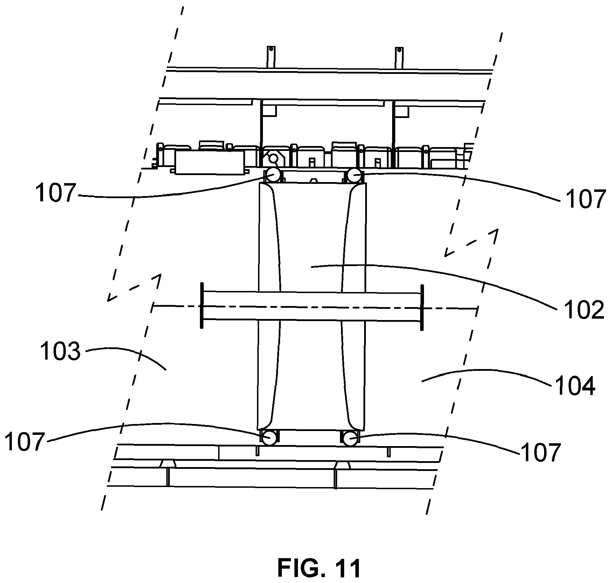

Fig. 11 provides a sectional view of the vacuum tanker showing the moveable piston (102) and a locking mechanism.

The piston (102) is moveable along the length of the vacuum tanker (35) in order to increase or reduce the volume of the two distinct sections of the largest portions of the vacuum tanker: the cleaning fluid reservoir section (103); and the sediment-storage section (104).

The moveable piston is lockable. The piston (102) can be locked in position using a locking mechanism. In one embodiment, the locking mechanism comprises a plurality of O-rings (107). Optionally, four O-rings are present. The O-rings can be located on the external faces of the piston. Optionally, the O-rings are made from rubber.

The O-rings can be inflated or deflated via a collapsible airline connected to the piston face. Upon inflation, the O-rings expand, which increases the pressure on the piston, thereby clamping it in place against the walls of the vacuum tanker.

The pressure being applied to the locking system can be controlled via the on-board compressed air system of the road vehicle. A collapsible air line can be connected from the integrated air system of the road vehicle to the locking mechanism through the centre of the piston. Optionally, the collapsible hose is located in the variable-volume section of the tanker.

The locking mechanism also serves as a seal, which prevents cross-contamination between the two distinct sections of the largest portion of the vacuum tanker. This negates the need for separate tankers and additional equipment as both the cleaning fluid and the sediment can be transported using a single vacuum tanker.

The present invention provides an 'all-in-one' mobile tank cleaning apparatus, optionally as a single tractor-trailer road vehicle. This mobile apparatus is capable of facilitating every step of cleaning a storage tank and sediment removal, without the need for delivery of any other apparatus or equipment. The mobile apparatus can arrive on-site, carry out the process of sediment removal from the storage tank, and transport the sediment elsewhere for off-site disposal or storage. The mobile apparatus also meets with to the regulations on maximum legal road weight and physical dimensions.

## Claims

1. A mobile tank cleaning apparatus (10) for sediment removal from a hazardous-storage tank, comprising:
a road vehicle (15) having an integrated lifting means (20), a multiple-section vacuum tanker (35), and a unit (25), the unit (25) comprising a controlled environment operator workstation (40), a robotic cleaner (30), at least one umbilical hose (50),
wherein the unit (25) is movable on and off the road vehicle (15);
wherein the multiple-section vacuum tanker (35) comprises at least a cleaning fluid reservoir section and a sediment-storage section,
wherein in use the robotic cleaner (30) is attached to the umbilical hose (50) extending back into the container (25) and connected to the operator workstation (40),
such that cleaning fluid is pumped from the multiple-section vacuum tanker (35) to the robotic cleaner (30) via a high pressure pump, and sediment is removed from the hazardous-storage tank and transferred to the multiple-section vacuum tanker (35) via the at least one umbilical hose (85) during use, and wherein the multiple-section vacuum tanker (35) comprises at least a volume-variable cleaning fluid reservoir section (103) and a volume-variable sediment-storage section (104), and a moveable piston (102), wherein the volume of the cleaning fluid reservoir section (103) and the volume of the sediment-storage section (104) can be altered by moving the piston (102), wherein the unit comprises a control centre, the umbilical (50) further comprises hydraulic lines for controlling the robotic cleaner, which are operable by the operator via the control centre, and wherein the control centre provides a sealed controlled environment for the remote operator during cleaning and sediment removal.

2. An apparatus according to claim 1 wherein the vacuum tanker (35) comprises one or more additional tanks for housing cleaning fluid.

3. An apparatus according to any preceding claim further comprising an integral high-pressure pump on the road vehicle (15) to pump the cleaning fluid from the vacuum tanker (35) to the robotic cleaner (30).

4. An apparatus according to any preceding claim wherein the moveable piston (102) is lockable.

5. An apparatus according to any preceding claim wherein the moveable piston is moveable from at least a first position wherein the volume of the cleaning fluid reservoir section is maximised, to a second position wherein the volume of the sediment-storage section is maximised, during use of the apparatus.

6. An apparatus according to any preceding claim wherein the moveable piston (102) includes one or more seals to prevent cross-contamination of the cleaning fluid reservoir section and the sediment-storage section.

7. An apparatus according to any preceding claim wherein the apparatus further comprises an integral compressed air pump to operate the moving piston.

8. An apparatus according to any preceding claim wherein the unit (25) is a container comprising a housing for the robotic cleaner (30), a housing for the controlled environment operator workstation (40), and one or more umbilicals (50), wherein the controlled environment operator workstation (40) is an atmospheric sealed operation workstation.

9. An apparatus according to any preceding claim, wherein the robotic cleaner (30) comprises one or more of the group comprising: one or more high pressure water jet heads; one or more vacuum heads; one or more cameras, one or more lights; and rubber tracks optionally comprising integrated magnets, and optionally wherein the robotic cleaner (30) is attached to an umbilical cord (50) extendable in use between the robotic cleaner (30) and the vacuum tanker (35), optionally wherein the robotic cleaner (30) is a remote operated vehicle.

10. An apparatus according to any preceding claim comprising a tractor carrying the vacuum tanker (35), and a trailer carrying the unit (25), optionally wherein the trailer also carries the integrated lifting means (20).

11. An apparatus as claimed in any preceding claim wherein the hazardous-storage tank is in a Zone 0 Hazardous Area and the unit is operable in a Zone 1 Hazardous Area, and wherein the robotic cleaner (30) is moveable in and out of the Zone 0 hazardous area using the integrated lifting means.

12. An apparatus according to any preceding claim wherein the robotic cleaner (30) has a contracted configuration for storage or entering a hazardous-storage tank, and an extendible configuration for use.

13. An apparatus according to any preceding claims wherein the hazardous-storage tank is an oil or gas or chemical storage tank, optionally a bunded hazardous-storage tank.

14. A method of sediment removal from a hazardous-storage tank comprising the steps of:
providing a mobile tank cleaning apparatus (10) as defined in any one of claims 1-13;
offloading the unit (25) using the integrated lifting means (20);
providing cleaning fluid from the cleaning fluid reservoir section of the vacuum tanker (35) to the robotic cleaner (30) and operating the robotic cleaner (30) from the control centre in the controlled environment operator workstation (40) to clean the hazardous-storage tank;
moving the movable piston in the multiple-section vacuum tanker to reduce the volume of the cleaning fluid reservoir section and to increase the volume of the sediment-storage section; and
removing sediment from the hazardous-storage tank to the sediment-storage section of the vacuum tanker (35) via an umbilical (50).

15. A method according to claim 14 further comprising lifting the robotic cleaner (30) towards the hazardous-storage tank with the integrated lifting means (20).

## Patentansprüche

1. Ein mobiles Tankreinigungsgerät (10) zur Entfernung von Sedimenten aus einem Lagertank, der eine Gefahr darstellt, beinhaltend:
ein Straßenfahrzeug (15) mit einem integrierten Hebemittel (20), einem Mehrabschnitt-Saugwagen (35) und einer Einheit (25), wobei die Einheit (25) einen Arbeitsplatz (40) für einen Bediener mit kontrollierter Umgebung, einen Reinigungsroboter (30),
mindestens einen Versorgungsschlauch (50) beinhaltet,
wobei die Einheit (25) auf und von dem Straßenfahrzeug (15) bewegbar ist;
wobei der Mehrabschnitt-Saugwagen (35) mindestens einen Reinigungsflüssigkeitreservoirabschnitt und einen Sedimentspeicherabschnitt beinhaltet,
wobei der Reinigungsroboter (30) im Gebrauch an dem Versorgungsschlauch (50) befestigt ist, der sich zurück in den Behälter (25) erstreckt und mit dem Arbeitsplatz (40) für den Bediener verbunden ist,
sodass Reinigungsflüssigkeit von dem Mehrabschnitt-Saugwagen (35) über eine Hochdruckpumpe zu dem Reinigungsroboter (30) gepumpt wird und Sediment aus dem Lagertank, der eine Gefahr darstellt, entfernt wird und während des Gebrauchs über den mindestens einen Versorgungsschlauch (85) zu dem Mehrabschnitt-Saugwagen (35) übertragen wird, und wobei der Mehrabschnitt-Saugwagen (35) mindestens einen volumenvariablen Reinigungsflüssigkeitreservoirabschnitt (103) und einen volumenvariablen Sedimentspeicherabschnitt (104) und einen bewegbaren Kolben (102) beinhaltet, wobei das Volumen des Reinigungsflüssigkeitreservoirabschnitts (103) und das Volumen des Sedimentspeicherabschnitts (104) durch Bewegen des Kolbens (102) verändert werden können,
wobei die Einheit eine Steuerzentrale beinhaltet, die Versorgungseinrichtung (50) ferner Hydraulikleitungen zum Steuern des Reinigungsroboters beinhaltet, die von dem Bediener über die Steuerzentrale bedienbar sind, und wobei die Steuerzentrale eine abgedichtete kontrollierte Umgebung für den entfernten Bediener während der Reinigung und der Entfernung von Sedimenten bereitstellt.

2. Gerät gemäß Anspruch 1, wobei der Saugwagen (35) einen oder mehrere zusätzliche Tanks zum Aufnehmen von Reinigungsflüssigkeit beinhaltet.

3. Gerät gemäß einem der vorhergehenden Ansprüche, das ferner eine integrierte Hochdruckpumpe an dem Straßenfahrzeug (15) beinhaltet, um die Reinigungsflüssigkeit von dem Saugwagen (35) zu dem Reinigungsroboter (30) zu pumpen.

4. Gerät gemäß einem der vorhergehenden Ansprüche, wobei der bewegliche Kolben (102) arretierbar ist.

5. Gerät gemäß einem der vorhergehenden Ansprüche, wobei der bewegliche Kolben während des Gebrauchs des Geräts von mindestens einer ersten Position, in der das Volumen des Reinigungsflüssigkeitreservoirabschnitts maximiert ist, zu einer zweiten Position, in der das Volumen des Sedimentspeicherabschnitts maximiert ist, bewegbar ist.

6. Gerät gemäß einem der vorhergehenden Ansprüche, wobei der bewegbare Kolben (102) eine oder mehrere Dichtungen umfasst, um eine Kreuzkontamination des Reinigungsflüssigkeitreservoirabschnitts und des Sedimentspeicherabschnitts zu verhindern.

7. Gerät gemäß einem der vorhergehenden Ansprüche, wobei das Gerät ferner eine integrierte Druckluftpumpe beinhaltet, um den sich bewegenden Kolben zu betreiben.

8. Gerät gemäß einem der vorhergehenden Ansprüche, wobei die Einheit (25) ein Behälter ist, der ein Gehäuse für den Reinigungsroboter (30), ein Gehäuse für den Arbeitsplatz (40) für den Bediener mit kontrollierter Umgebung und einen oder mehrere Versorgungseinrichtungen (50) beinhaltet, wobei der Arbeitsplatz (40) für den Bediener mit kontrollierter Umgebung ein atmosphärisch abgedichteter Operationsarbeitsplatz ist.

9. Gerät gemäß einem der vorhergehenden Ansprüche, wobei der Reinigungsroboter (30) eines oder mehrere aus der Gruppe beinhaltet, die Folgendes beinhaltet: einen oder mehrere Hochdruckwasserstrahlköpfe; einen oder mehrere Saugköpfe; eine oder mehrere Kameras, eine oder mehrere Leuchten; und Gummispuren, die optional integrierte Magnete beinhalten, und wobei der Reinigungsroboter (30) optional an einem Versorgungskabel (50) befestigt ist, das sich im Gebrauch zwischen dem Reinigungsroboter (30) und dem Saugwagen (35) erstrecken kann, wobei der Reinigungsroboter (30) optional ein ferngesteuertes Fahrzeug ist.

10. Gerät gemäß einem der vorhergehenden Ansprüche, das einen Traktor, der den Saugwagen (35) trägt, und einen Anhänger, der die Einheit (25) trägt, beinhaltet, wobei der Anhänger optional auch das integrierte Hebemittel (20) trägt.

11. Gerät gemäß einem der vorhergehenden Ansprüche, wobei sich der Lagertank, der eine Gefahr darstellt, in einem Gefahrenbereich der Zone 0 befindet und die Einheit in einem Gefahrenbereich der Zone 1 betriebsfähig ist, und wobei der Reinigungsroboter (30) unter Verwendung des integrierten Hebemittels in den Gefahrenbereich der Zone 0 hinein und aus diesem heraus bewegbar ist.

12. Gerät gemäß einem der vorhergehenden Ansprüche, wobei der Reinigungsroboter (30) eine zusammengezogene Konfiguration zum Lagern oder Eintreten in einen Lagertank, der eine Gefahr darstellt, und eine ausfahrbare Konfiguration zum Gebrauch aufweist.

13. Gerät gemäß einem der vorhergehenden Ansprüche, wobei der Lagertank, der eine Gefahr darstellt, ein Öl- oder Gas- oder Chemikalienlagertank, optional ein doppelwändiger Lagertank, der eine Gefahr darstellt, ist.

14. Ein Verfahren zur Entfernung von Sedimenten aus einem Lagertank, der eine Gefahr darstellt, beinhaltend die folgenden Schritte:
Bereitstellen eines mobilen Tankreinigungsgeräts (10) gemäß einem der Ansprüche 1-13;
Abladen der Einheit (25) unter Verwendung des integrierten Hebemittels (20);
Bereitstellen von Reinigungsflüssigkeit von dem Reinigungsflüssigkeitreservoirabschnitt des Saugwagens (35) an den Reinigungsroboter (30) und Betreiben des Reinigungsroboters (30) von der Steuerzentrale in dem Arbeitsplatz (40) für den Bediener mit kontrollierter Umgebung, um den Lagertank, der eine Gefahr darstellt, zu reinigen;
Bewegen des bewegbaren Kolbens in dem Mehrabschnitt-Saugwagen, um das Volumen des Reinigungsflüssigkeitreservoirabschnitts zu verringern und das Volumen des Sedimentspeicherabschnitts zu erhöhen.
Entfernen von Sedimenten aus dem Lagertank, der eine Gefahr darstellt, zu dem Sedimentspeicherabschnitt des Saugwagens (35) über eine Versorgungseinrichtung (50).

15. Verfahren gemäß Anspruch 14, das ferner das Anheben des Reinigungsroboters (30) in Richtung des Lagertanks, der eine Gefahr darstellt, unter Verwendung des integrierten Hebemittels (20) beinhaltet.

## Revendications

1. Un appareil de nettoyage de cuve mobile (10) pour le retrait de sédiments d'une cuve de stockage présentant un danger, comprenant :
un véhicule routier (15) ayant un moyen de levage intégré (20), une citerne à vide à sections multiples (35), et une unité (25), l'unité (25) comprenant un poste de travail d'opérateur à environnement contrôlé (40), un robot nettoyeur (30), au moins un tuyau ombilical (50),
dans lequel l'unité (25) est déplaçable sur et hors du véhicule routier (15) ;
dans lequel la citerne à vide à sections multiples (35) comprend au moins une section de réservoir de fluide de nettoyage et une section de stockage de sédiments,
dans lequel, lors de l'utilisation, le robot nettoyeur (30) est attaché au tuyau ombilical (50) revenant en s'étendant jusque dans le conteneur (25) et relié au poste de travail d'opérateur (40),
de telle sorte que du fluide de nettoyage est pompé de la citerne à vide à sections multiples (35) au robot nettoyeur (30) via une pompe haute pression, et du sédiment est retiré de la cuve de stockage présentant un danger et transféré jusqu'à la citerne à vide à sections multiples (35) via l'au moins un tuyau ombilical (85) pendant l'utilisation, et dans lequel la citerne à vide à sections multiples (35) comprend au moins une section de réservoir de fluide de nettoyage à volume variable (103) et une section de stockage de sédiments à volume variable (104), et un piston déplaçable (102), dans lequel le volume de la section de réservoir de fluide de nettoyage (103) et le volume de la section de stockage de sédiments (104) peuvent être modifiés en déplaçant le piston (102),
dans lequel l'unité comprend un centre de contrôle, l'ombilical (50) comprend en outre des conduites hydrauliques pour contrôler le robot nettoyeur, qui sont aptes à être actionnées par l'opérateur via le centre de contrôle, et dans lequel le centre de contrôle fournit un environnement contrôlé étanche pour l'opérateur à distance pendant le nettoyage et le retrait de sédiments.

2. Un appareil selon la revendication 1 dans lequel la citerne à vide (35) comprend une ou plusieurs cuves supplémentaires pour loger du fluide de nettoyage.

3. Un appareil selon n'importe quelle revendication précédente comprenant en outre une pompe haute pression intégrée sur le véhicule routier (15) pour pomper le fluide de nettoyage de la citerne à vide (35) au robot nettoyeur (30).

4. Un appareil selon n'importe quelle revendication précédente dans lequel le piston déplaçable (102) est verrouillable.

5. Un appareil selon n'importe quelle revendication précédente dans lequel le piston déplaçable est déplaçable d'au moins une première position dans laquelle le volume de la section de réservoir de fluide de nettoyage est maximisé, à une deuxième position dans laquelle le volume de la section de stockage de sédiments est maximisé, pendant l'utilisation de l'appareil.

6. Un appareil selon n'importe quelle revendication précédente dans lequel le piston déplaçable (102) inclut un ou plusieurs joints d'étanchéité pour empêcher une contamination croisée de la section de réservoir de fluide de nettoyage et de la section de stockage de sédiments.

7. Un appareil selon n'importe quelle revendication précédente, l'appareil comprenant en outre une pompe à air comprimé intégrée pour faire fonctionner le piston se déplaçant.

8. Un appareil selon n'importe quelle revendication précédente dans lequel l'unité (25) est un conteneur comprenant un logement pour le robot nettoyeur (30), un logement pour le poste de travail d'opérateur à environnement contrôlé (40), et un ou plusieurs ombilicaux (50), le poste de travail d'opérateur à environnement contrôlé (40) étant un poste de travail opérationnel étanche à l'atmosphère.

9. Un appareil selon n'importe quelle revendication précédente, dans lequel le robot nettoyeur (30) comprend un ou plusieurs éléments du groupe comprenant : une ou plusieurs têtes à jet d'eau haute pression ; une ou plusieurs têtes à vide ; une ou plusieurs caméras, une ou plusieurs lumières ; et des chenilles en caoutchouc comprenant facultativement des aimants intégrés, et facultativement dans lequel le robot nettoyeur (30) est attaché à un cordon ombilical (50) extensible lors de l'utilisation entre le robot nettoyeur (30) et la citerne à vide (35), facultativement dans lequel le robot nettoyeur (30) est un véhicule actionné à distance.

10. Un appareil selon n'importe quelle revendication précédente comprenant un tracteur transportant la citerne à vide (35), et une remorque transportant l'unité (25), facultativement dans lequel la remorque transporte également le moyen de levage intégré (20).

11. Un appareil tel que revendiqué dans n'importe quelle revendication précédente dans lequel la cuve de stockage présentant un danger est dans un secteur présentant un danger de Zone 0 et l'unité est apte à être actionnée dans un secteur présentant un danger de Zone 1, et dans lequel le robot nettoyeur (30) est déplaçable dans et hors du secteur présentant un danger de Zone 0 en utilisant le moyen de levage intégré.

12. Un appareil selon n'importe quelle revendication précédente dans lequel le robot nettoyeur (30) a une configuration contractée pour son stockage ou son entrée dans une cuve de stockage présentant un danger, et une configuration extensible pour son utilisation.

13. Un appareil selon n'importe quelles revendications précédentes dans lequel la cuve de stockage présentant un danger est une cuve de stockage de pétrole ou de gaz ou de produit chimique, facultativement une cuve de stockage présentant un danger avec un mur de protection.

14. Un procédé de retrait de sédiments d'une cuve de stockage présentant un danger comprenant les étapes consistant à :
fournir un appareil de nettoyage de cuve mobile (10) tel que défini dans l'une quelconque des revendications 1 à 13 ;
décharger l'unité (25) en utilisant le moyen de levage intégré (20) ;
fournir du fluide de nettoyage de la section de réservoir de fluide de nettoyage de la citerne à vide (35) au robot nettoyeur (30) et faire fonctionner le robot nettoyeur (30) depuis le centre de contrôle dans le poste de travail d'opérateur à environnement contrôlé (40) pour nettoyer la cuve de stockage présentant un danger ;
déplacer le piston déplaçable dans la citerne à vide à sections multiples pour réduire le volume de la section de réservoir de fluide de nettoyage et pour augmenter le volume de la section de stockage de sédiments ; et
retirer du sédiment de la cuve de stockage présentant un danger jusqu'à la section de stockage de sédiments de la citerne à vide (35) via un ombilical (50).

15. Un procédé selon la revendication 14 comprenant en outre le levage du robot nettoyeur (30) vers la cuve de stockage présentant un danger à l'aide du moyen de levage intégré (20).
